# EUROPEAN PATENT SPECIFICATION

(11) **EP 3 895 943 B1**
(45) Date of publication and mention of the grant of the patent: **02.08.2023**
(21) Application number: 19934924.2
(22) Date of filing: 27.08.2019
(51) Int. Cl.: B60T 8/17, B60T 17/22

(54) **TRAIN-GRADE BRAKING FORCE MANAGEMENT METHOD**
VERFAHREN ZUR VERWALTUNG DER BREMSKRAFT EINES ZUGES
PROCÉDÉ DE GESTION DE FORCE DE FREINAGE DE QUALITÉ FERROVIAIRE

(30) Priority: 26.06.2019 CN 201910561481
(43) Date of publication of application: 20.10.2021
(73) Proprietor: CRRC Nanjing Puzhen Haitai Brake Equipment Co., Ltd., Nanjing, Jiangsu 211800 (CN)
(72) Inventor: YANG, Zhengzhuan, Nanjing, Jiangsu 211800 (CN); YANG, Jun, Nanjing, Jiangsu 211800 (CN); LIU, Yinhu, Nanjing, Jiangsu 211800 (CN); DU, Yunzhe, Nanjing, Jiangsu 211800 (CN); XING, Shen, Nanjing, Jiangsu 211800 (CN); HU, Kang, Nanjing, Jiangsu 211800 (CN); ZHAO, Sa, Nanjing, Jiangsu 211800 (CN)
(74) Representative: Murgitroyd & Company
(86) International application number: PCT/CN2019/102675
(87) International publication number: WO 2020/258486

## Description

### TECHNICAL FIELD

The present invention relates to rail transit train braking force control technologies, and in particular, to a train-grade braking force management method with high reliability.

### BACKGROUND

Currently, rail transit is rapidly developed. There is an increasing number of demands for rail vehicles. Particularly, since a departure interval of urban rail transit vehicles is increasingly short, higher requirements are raised for safety, reliability, usability, and comfortability of a rail vehicle braking system. Most rail vehicle braking systems adopt direct brake controlled by an electronic unit and need to possess good braking force control, to ensure safety of multiple units in a high-speed running process while satisfying maintainability and economy of operation.

Upon retrieval, it is found that the Chinese invention patent application CN202320277U discloses a bogie-controlled braking system. In this system, an electronic braking control unit is mounted closely to each bogie of a car, and bogie-controlled braking systems are communicably connected to each other through a CAN cable. The CAN cable makes all EBCUs that are mounted onto the CAN cable form a unit without relying on a train bus, making it possible to distribute a braking force on a train grade, that is, utilizing electric braking to the largest extent, thereby fully optimizing friction braking distribution of all bogies. Although in this solution, a dual-channel CAN cable is used to implement redundancy in terms of network, when a fault that both channels are disconnected at the same time occurs, reliability of the system cannot be ensured. The document CN105438151 A shows a train grade braking force method according to the preamble of claim 1.

### SUMMARY OF THE INVENTION

The technical problem to be resolved by the present invention is to overcome the foregoing defects and provide a train-grade braking force management method, to improve a fault-tolerant running capacity of a braking system and reliability and safety of the braking system. In addition, a whole-train braking force management manner is used, and braking force control precision of the system is higher. Compared with a conventional braking force management method, whole-train braking control precision is higher. In the method of the system, multiple redundancy is set, and autonomous decentralization and master-slave control are adopted. In a case that a single control unit is faulty, other control units can accurately supplement a braking force of the control unit to ensure normal application of a train braking force, so that reliability and safety are higher. The main control unit adopts a hot backup manner to improve the fault-tolerant running capacity of the system.

To resolve the foregoing technical problem, the present invention provides a train-grade braking force management method, implemented based on an electronic braking control unit through a braking system constituted by a train network and a braking intranet, where a train is divided into a plurality of network segments, the network segments exchange information through the train network, electronic braking control units on two ends of each network segment are main control units, and the main control unit collects information from the train network and information from the braking intranet to calculate and distribute a braking force, and then, distributes, through the braking intranet, the braking force to each electronic braking control unit of a network segment in which the main control unit is located, thereby implementing braking force management of the whole train, where: when the braking intranet has a disconnection fault, the braking intranet is divided into two regions, two main control units of a faulty network segment respectively collect car weight information and available air braking information of electronic braking control units on respective sides through the braking intranet and upload the car weight information and the available air braking information through the train network, to enable each main control unit to receive relevant information of the whole train, perform braking calculation, and a braking force applied to each car, and the two main control units of the faulty network segment distribute, through the braking intranet, a braking force that needs to be applied to the electronic braking control units of a side of the fault.

The present invention further has the following features:
1. If a specific main control unit in a network segment is faulty, the faulty main control unit sets a main control signal thereof to "0", after each electronic braking control unit detects that the main control signal of the main control unit is set to "0", braking is implemented by using a braking force distributed by the other main control unit in the network segment, in addition, a car in which the main control unit is faulty participates in calculation of a braking force by using a rated passenger car weight, an available air braking capacity of the car in which the main control unit is faulty is set to 0, braking force distribution of the car is not performed, and other cars undertake a braking force of the car, to implement braking force distribution of the whole train.
2. If the braking intranet has a disconnection fault that makes an electronic braking control unit other than the main control units in the network segment offline, the two main control units in the network segment set car weight information of a car in which the offline electronic braking control unit is located to 0, the car of the offline electronic braking control unit participates in calculation of a braking force by using a rated passenger car weight, an available pneumatic braking capacity of the car in which the offline electronic braking control unit is located is set 0, braking force distribution of the car is not performed, and other cars undertake a braking force of the car, to implement braking force distribution of the whole train.
3. If a specific electronic braking control unit other than main control units in a network segment is faulty, the two main control units in the network segment set car weight information of a car in which the electronic braking control unit is faulty to 0, the car in which the electronic braking control unit is faulty participates in calculation of a braking force by using a rated passenger car weight, an available pneumatic braking capacity of the car in which the electronic braking control unit is faulty is set 0, braking force distribution of the car is not performed, and other cars undertake a braking force of the car, to implement braking force distribution of the whole train.
4. If the train network is faulty, main control units of each network segment separately calculate a braking force needed in the present network segment and distribute the braking force in the present network segment according to a received braking instruction, to ensure a braking force needed by the whole train.

The present invention is an autonomous decentralized braking force management manner between network segments that is skillfully designed based on a train network (MVB network) and a braking intranet (CAN network), where in a network segment, a maser-slave control manner is adopted, and two redundant main control units that are hot backup for each other are set to implement train-grade braking force management. In the present invention, autonomous decentralized management of a braking force between network segments is implemented through the MVB network. In a case that the MVB network is faulty, each network segment can autonomously manage a braking force. Two main control unit that are mutually redundant are set in each network segment, to implement master-slave control. If the CAN network or a specific main control unit is faulty, main control switchover can be performed in time, to implement train-grade braking force management. Normal working of the braking system is ensured, and safety and reliability of the braking system and the train are improved. Therefore, in the present invention, the basic train network (MVB network), the braking intranet, and the braking control units are skillfully designed, to ensure reliability and safety of the braking system in a running process of the train.

### BRIEF DESCRIPTION OF THE DRAWING

FIG. 1 shows a braking force management architecture in a normal working condition according to the present invention;
FIG. 2 shows a braking force management architecture in a CAN intranet fault situation I;
FIG. 3 shows a braking force management architecture in a CAN intranet fault situation II; and
FIG. 4 shows a braking force management architecture in a working condition in which a specific braking control unit in a network segment is faulty.

### DETAILED DESCRIPTION OF THE EMBODIMENTS

To make objectives, technical solutions, and advantages of the embodiments of the present invention clearer, the technical solutions in the embodiments of the present invention are described below clearly and completely with reference to accompanying drawings in the embodiments of the present invention.

The present invention provides a train-grade braking force management method with high reliability. The method is implemented based on an electronic braking control unit through a braking system constituted by a train network (MVB network) and a braking intranet (CAN network).

The train network (MVB network) transmits braking instruction information of a TCMS, electric braking-related information of a DCU, and information, such as a car weight and an available air braking capacity, mutually transmitted between respective network segments in the braking intranet.

The braking intranet (CAN network) adopts a double redundant structure, transmits information, such as car weight information, an available air braking capacity, an actual air braking completion value, a sliding state, and a fault, sent by an LU to an MU, and transmits information, such as a target air braking value and a braking instruction state, sent by the MU to the LU.

Two main control electronic braking control units (EBCUs) are disposed in each braking intranet, where the MUs are mutually redundant by adopting a hot backup manner and mainly receive information, such as a braking instruction from the train network, electric braking related information, a car weight and an available air braking capacity of another network unit, a car weight and an air braking capacity of each LU unit in the present unit, to calculate and distribute a braking force of the whole train. The LU performs braking force control, fault diagnosis and the like by receiving, through the braking intranet, a target braking force distributed by the MU.

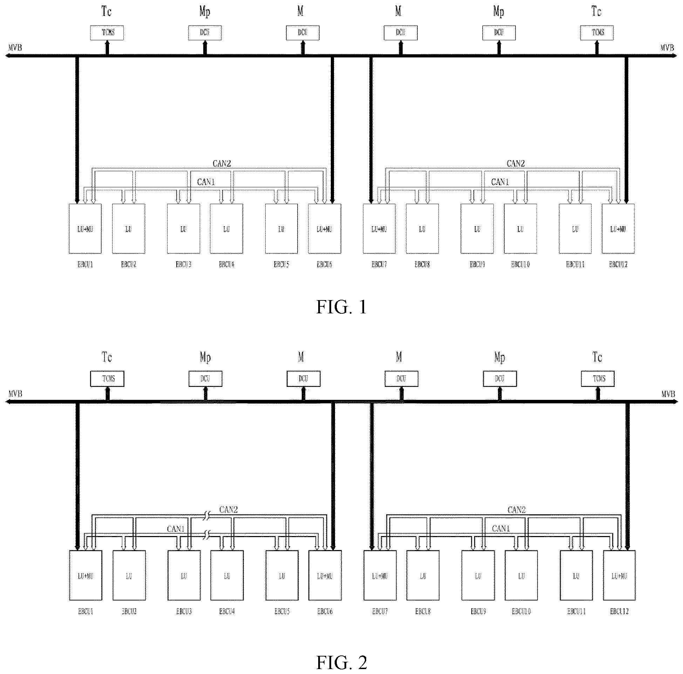

It can be seen from a braking force management architecture in a normal working condition according to the present invention provided in FIG. 1 that braking units of the whole train are divided into two network segments, where a first network segment is provided with two main control units EBCU1 and EBCU6, and a second network segment is provided with two main control units EBCU7 and EBCU12, the four main control unit are connected through the MVB network and separately receive braking instructions from the MVB network and a hard line, and receive information, such as a car weight, air braking available information of each car, electric braking information, and electric braking sliding, from the MVB and CAN networks to calculate and distribute a braking force of the whole train and a braking force of the present network segment. Each EBCU receives by default a braking force distributed by the EBCU1 and the EBCU12. In addition, if the MVB is faulty, the EBCU1 and the EBCU6, and the EBCU7 and the EBCU12 separately calculate a braking force needed in the present unit and distribute the braking force in the present unit according to received relevant information such as a braking instruction, to ensure a braking force needed by the whole train. If the train network is faulty, main control units of each network segment separately calculate a braking force needed in the present network segment and distribute the braking force in the present network segment according to a received braking instruction, to ensure a braking force needed by the whole train.

FIG. 2 provides a train-grade braking force management architecture in a CAN intranet fault situation I. It can be seen that there is a CAN network disconnection fault between the EBCU3 and the EBCU4, resulting in that the braking intranet is divided into two regions. The EBCU1 collects car weight information and available air braking information of the EBCU1, the EBCU2, and the EBCU3 through the braking intranet and uploads the car weight information and the available air braking information through the MVB network, so that it can be ensured that each main control unit can receive relevant information of the whole train to perform braking calculation and calculate a braking force applied to each car. After the calculation, the EBCU1 distributes, through the braking intranet to the EBCU1, the EBCU2, and the EBCU3, braking forces that need to be applied, and the EBCU6 distributes, through the braking intranet to the EBCU4, the EBCU5, and the EBCU6, braking forces that need to be applied.

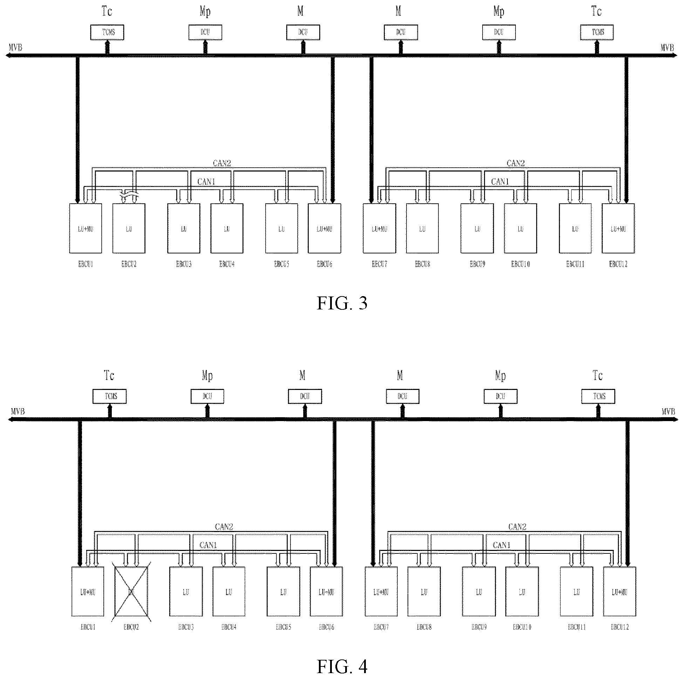

FIG. 3 provides a train-grade braking force management architecture in a CAN intranet fault situation II. If the braking intranet has a disconnection fault that makes the EBCU2 offline, the two main control units EBCU1 and EBCU6 in the network segment set car weight information of a car in which the offline electronic braking control unit EBCU2 is located to 0, the car of the offline electronic braking control unit EBCU2 participates in calculation of a braking force by using a rated passenger car weight, an available air braking capacity of the car in which the EBCU2 is located is set 0, braking force distribution of the car is not performed, and other cars undertake a braking force of the car, to implement braking force distribution of the whole train, without losing a braking force to ensure safety of the train.

FIG. 4 provides a train-grade braking force management architecture in a working condition in which a specific braking control unit in a network segment is faulty. When the electronic braking control unit EBCU2 in the network segment is faulty, a handling situation is similar to that in FIG. 3. Details are not described herein again.

If the main control unit EBCU1 is faulty, the EBCU1 sets a main control signal thereof to "0", after each electronic braking control unit detects that the main control signal of the EBCU1 is set to "0", braking is implemented by using a braking force distributed by the other main control unit EBCU6 in the network segment, in addition, a car in which the EBCU6 is located participates in calculation of a braking force by using a rated passenger car weight, an available air braking capacity of the car in which the EBCU6 is located is set to 0, braking force distribution of the car is not performed, and other cars undertake a braking force of the car, to implement braking force distribution of the whole train.

In conclusion, the train-grade braking force management method with high reliability of the present invention has good effects, can reliably guide a train to a safe side in a case of various device faults, to ensure normal application of a braking force of the train, thereby ensuring safe and reliably running of the train while ensuring usability of a braking system. Therefore, a train-grade braking force management method with high reliability involved in the present invention has good braking control performance and a broad application prospect.

In addition to the foregoing embodiments, the present invention may further include other implementations. Any technical solution formed by equivalent replacement or equivalent transformation falls within the protection scope claimed in the present invention as claimed in the appended claims.

## Claims

1. A train-grade braking force management method, implemented based on an electronic braking control unit through a braking system constituted by a train network and a braking intranet, wherein a train is divided into a plurality of network segments, the network segments exchange information through the train network, electronic braking control units on two ends of each network segment are main control units, and the main control unit collects information from the train network and information from the braking intranet to calculate and distribute a braking force, and then, distributes, through the braking intranet, the braking force to each electronic braking control unit of a network segment in which the main control unit is located, thereby implementing braking force management of the whole train, **characterized in that**: when the braking intranet has a disconnection fault, the braking intranet is divided into two regions, two main control units of a faulty network segment respectively collect car weight information and available air braking information of electronic braking control units on respective sides through the braking intranet and upload the car weight information and the available air braking information through the train network, to enable each main control unit to receive relevant information of the whole train, perform braking calculation, and a braking force applied to each car, and the two main control units of the faulty network segment distribute, through the braking intranet, a braking force that needs to be applied to the electronic braking control units of a side of the fault.

2. The train-grade braking force management method according to claim 1, wherein if a specific main control unit in a network segment is faulty, the faulty main control unit sets a main control signal thereof to "0", after each electronic braking control unit detects that the main control signal of the main control unit is set to "0", braking is implemented by using a braking force distributed by the other main control unit in the network segment, in addition, a car in which the main control unit is faulty participates in calculation of a braking force by using a rated passenger car weight, an available air braking capacity of the car in which the main control unit is faulty is set to 0, braking force distribution of the car is not performed, and other cars undertake a braking force of the car, to implement braking force distribution of the whole train.

3. The train-grade braking force management method according to claim 1, wherein if the braking intranet has a disconnection fault that makes an electronic braking control unit other than the main control units in the network segment offline, the two main control units in the network segment set car weight information of a car in which the offline electronic braking control unit is located to 0, the car of the offline electronic braking control unit participates in calculation of a braking force by using a rated passenger car weight, an available air braking capacity of the car in which the offline electronic braking control unit is located is set 0, braking force distribution of the car is not performed, and other cars undertake a braking force of the car, to implement braking force distribution of the whole train.

4. The train-grade braking force management method according to claim 1, wherein if a specific electronic braking control unit other than main control units in a network segment is faulty, the two main control units in the network segment set car weight information of a car in which the electronic braking control unit is faulty to 0, the car in which the electronic braking control unit is faulty participates in calculation of a braking force by using a rated passenger car weight, an available air braking capacity of the car in which the electronic braking control unit is faulty is set 0, braking force distribution of the car is not performed, and other cars undertake a braking force of the car, to implement braking force distribution of the whole train.

5. The train-grade braking force management method according to claim 1, wherein if the train network is faulty, main control units of each network segment separately calculate a braking force needed in the present network segment and distribute the braking force in the present network segment according to a received braking instruction, to ensure a braking force needed by the whole train.

6. The train-grade braking force management method according to claim 1, wherein the braking system further comprises a braking hard line, and the main control units of each network segment are separately connected to the braking hard line, to receive a hard line braking instruction.

7. The train-grade braking force management method according to claim 1, wherein the main control unit receives a car weight, air braking available information of each car, electric braking information, electric braking sliding information through the train network and the braking intranet to calculate and distribute a braking force of the whole train and a braking force of the present network segment, and the electronic braking control unit implements by default braking according to a braking force distributed by the main control unit in the present network segment.

8. The train-grade braking force management method according to claim 1, wherein the train network is an MVB network or an Ethernet, and the braking intranet is a CAN network or a 485 network.

9. The train-grade braking force management method according to claim 1, wherein the CAN network is a double redundant structure.

10. The train-grade braking force management method according to claim 1, wherein an electric braking force is used first, and air braking is supplemented when the electric braking force is insufficient; and in a case that a specific air braking control unit is faulty, the remaining control units in the whole train performs braking force supplementation without exceeding an adhesion condition.

## Patentansprüche

1. Ein für Züge geeignetes Verfahren zur Bremskraftverwaltung, das auf der Basis einer elektronischen Bremssteuereinheit durch ein Bremssystem implementiert wird, welches aus einem Zugnetzwerk und einem Bremsintranet zusammengesetzt ist, wobei ein Zug in eine Vielzahl von Netzwerksegmenten unterteilt wird, die Netzwerksegmente Informationen durch das Zugnetzwerk austauschen, elektronische Bremssteuereinheiten an zwei Enden jedes Netzwerksegments Hauptsteuereinheiten sind und die Hauptsteuereinheit Informationen aus dem Zugnetzwerk und Informationen aus dem Bremsintranet sammelt, um eine Bremskraft zu berechnen und zu verteilen, und die Bremskraft dann durch das Bremsintranet an jede elektronische Bremssteuereinheit eines Netzwerksegments, in dem die Hauptsteuereinheit angeordnet ist, verteilt, wodurch eine Bremskraftverwaltung des gesamten Zugs implementiert wird, **dadurch gekennzeichnet, dass**:
wenn das Bremsintranet eine Unterbrechungsstörung aufweist, das Bremsintranet in zwei Regionen unterteilt wird, zwei Hauptsteuereinheiten eines gestörten Netzwerksegments jeweils Wagengewichtsinformationen und Informationen über die verfügbare Druckluftbremsung von elektronischen Bremssteuereinheiten auf jeweiligen Seiten durch das Bremsintranet sammeln und die Wagengewichtsinformationen und die Informationen über die verfügbare Druckluftbremsung durch das Zugnetzwerk hochladen, um zu ermöglichen, dass jede Hauptsteuereinheit relevante Informationen des gesamten Zugs erhält, um eine Bremsberechnung und eine auf jeden Wagen angewandte Bremskraft durchzuführen, und die zwei Hauptsteuereinheiten des gestörten Netzwerksegments durch das Bremsintranet eine Bremskraft verteilen, die auf die elektronischen Bremssteuereinheiten einer Seite der Störung angewandt werden muss.

2. Für Züge geeignetes Verfahren zur Bremskraftverwaltung gemäß Anspruch 1, wobei, wenn eine spezifische Hauptsteuereinheit in einem Netzwerksegment gestört ist, die gestörte Hauptsteuereinheit ein Hauptsteuersignal davon auf "0" setzt, nachdem jede elektronische Bremssteuereinheit detektiert hat, dass das Hauptsteuersignal der Hauptsteuereinheit auf "0" gesetzt ist, eine Bremsung durch die Verwendung einer Bremskraft implementiert wird, welche durch die andere Hauptsteuereinheit in dem Netzwerksegment verteilt wird, zusätzlich ein Wagen, in dem die Hauptsteuereinheit gestört ist, durch die Verwendung eines Personenwagennenngewichts an der Berechnung einer Bremskraft teilnimmt, eine verfügbare Druckluftbremskapazität des Wagens, in dem die Hauptsteuereinheit gestört ist, auf 0 gesetzt wird, keine Bremskraftverteilung des Wagens durchgeführt wird und andere Wagen eine Bremskraft des Wagens übernehmen, um eine Bremskraftverteilung des gesamten Zugs zu implementieren.

3. Für Züge geeignetes Verfahren zur Bremskraftverwaltung gemäß Anspruch 1, wobei, wenn das Bremsintranet eine Unterbrechungsstörung aufweist, die dazu führt, dass eine andere elektronische Bremssteuereinheit als die Hauptsteuereinheiten in dem Netzwerksegment vom Netz getrennt ist, die zwei Hauptsteuereinheiten in dem Netzwerksegment Wagengewichtsinformationen eines Wagens, in dem die vom Netz getrennte elektronische Bremssteuereinheit angeordnet ist, auf 0 setzen, der Wagen der vom Netz getrennten elektronischen Bremssteuereinheit durch die Verwendung eines Personenwagennenngewichts an der Berechnung einer Bremskraft teilnimmt, eine verfügbare Druckluftbremskapazität des Wagens, in dem die vom Netz getrennte elektronische Bremssteuereinheit angeordnet ist, auf 0 gesetzt wird, keine Bremskraftverteilung des Wagens durchgeführt wird und andere Wagen eine Bremskraft des Wagens übernehmen, um eine Bremskraftverteilung des gesamten Zugs zu implementieren.

4. Für Züge geeignetes Verfahren zur Bremskraftverwaltung gemäß Anspruch 1, wobei, wenn eine spezifische andere elektronische Bremssteuereinheit als die Hauptsteuereinheiten in einem Netzwerksegment gestört ist, die zwei Hauptsteuereinheiten in dem Netzwerksegment Wagengewichtsinformationen eines Wagens, in dem sich die gestörte elektronische Bremssteuereinheit befindet, auf 0 setzen, der Wagen, in dem sich die gestörte elektronische Bremssteuereinheit befindet, durch die Verwendung eines Personenwagennenngewichts an der Berechnung einer Bremskraft teilnimmt, eine verfügbare Druckluftbremskapazität des Wagens, in dem sich die gestörte elektronische Bremssteuereinheit befindet, auf 0 gesetzt wird, keine Bremskraftverteilung des Wagens durchgeführt wird und andere Wagen eine Bremskraft des Wagens übernehmen, um eine Bremskraftverteilung des gesamten Zugs zu implementieren.

5. Für Züge geeignetes Verfahren zur Bremskraftverwaltung gemäß Anspruch 1, wobei, wenn das Zugnetzwerk gestört ist, Hauptsteuereinheiten jedes Netzwerksegments eine in dem vorliegenden Netzwerksegment benötigte Bremskraft separat berechnen und die Bremskraft in dem vorliegenden Netzwerksegment gemäß einer erhaltenen Bremsanweisung verteilen, um eine von dem gesamten Zug benötigte Bremskraft bereitzustellen.

6. Für Züge geeignetes Verfahren zur Bremskraftverwaltung gemäß Anspruch 1, wobei das Bremssystem ferner eine feste Bremsleitung beinhaltet und die Hauptsteuereinheiten jedes Netzwerksegments separat mit der festen Bremsleitung verbunden sind, um eine Bremsanweisung über die feste Leitung zu erhalten.

7. Für Züge geeignetes Verfahren zur Bremskraftverwaltung gemäß Anspruch 1, wobei die Hauptsteuereinheit ein Wagengewicht, Informationen über die verfügbare Druckluftbremsung jedes Wagens, Informationen über elektrische Bremsung, Gleitinformationen über elektrische Bremsung durch das Zugnetzwerk und das Bremsintranet erhält, um eine Bremskraft des gesamten Zugs und eine Bremskraft des vorliegenden Netzwerksegments zu berechnen und zu verteilen, und die elektronische Bremssteuereinheit standardmäßig eine Bremsung gemäß einer durch die Hauptsteuereinheit in dem vorliegenden Netzwerksegment verteilten Bremskraft implementiert.

8. Für Züge geeignetes Verfahren zur Bremskraftverwaltung gemäß Anspruch 1, wobei das Zugnetzwerk ein MVB-Netzwerk oder ein Ethernet ist und das Bremsintranet ein CAN-Netzwerk oder ein 485-Netzwerk ist.

9. Für Züge geeignetes Verfahren zur Bremskraftverwaltung gemäß Anspruch 1, wobei das CAN-Netzwerk eine doppelt redundante Struktur ist.

10. Für Züge geeignetes Verfahren zur Bremskraftverwaltung gemäß Anspruch 1, wobei zuerst eine elektrische Bremskraft verwendet wird und Druckluftbremsung ergänzend hinzugefügt wird, wenn die elektrische Bremskraft nicht ausreicht; und in einem Fall, dass eine spezifische Druckluftbremssteuereinheit gestört ist, die übrigen Steuereinheiten in dem gesamten Zug Bremskraftergänzung durchführen, ohne eine Kraftschlussbedingung zu überschreiten.

## Revendications

1. Un procédé de gestion de force de freinage de qualité ferroviaire, mis en oeuvre sur la base d'une unité de commande de freinage électronique par l'intermédiaire d'un système de freinage constitué par un réseau de train et un intranet de freinage, où un train est divisé en une pluralité de segments de réseau, les segments de réseau échangent des informations par l'intermédiaire du réseau de train, des unités de commande de freinage électroniques sur deux extrémités de chaque segment de réseau sont des unités de commande principales, et l'unité de commande principale recueille des informations provenant du réseau de train et des informations provenant de l'intranet de freinage pour calculer et répartir une force de freinage, et ensuite, répartit, par l'intermédiaire de l'intranet de freinage, la force de freinage à chaque unité de commande de freinage électronique d'un segment de réseau dans lequel l'unité de commande principale est située, mettant par là en oeuvre la gestion de force de freinage du train tout entier, **caractérisé en ce que** :
lorsque l'intranet de freinage a une défaillance de déconnexion, l'intranet de freinage est divisé en deux régions, deux unités de commande principales d'un segment de réseau défaillant recueillent respectivement des informations de poids de voiture et des informations d'aérofreinage disponible d'unités de commande de freinage électroniques sur des côtés respectifs par l'intermédiaire de l'intranet de freinage et téléchargent vers l'amont les informations de poids de voiture et les informations d'aérofreinage disponible par l'intermédiaire du réseau de train, pour permettre à chaque unité de commande principale de recevoir des informations pertinentes du train tout entier, effectuer un calcul de freinage, et une force de freinage appliquée à chaque voiture, et les deux unités de commande principales du segment de réseau défaillant répartissent, par l'intermédiaire de l'intranet de freinage, une force de freinage qui a besoin d'être appliquée aux unités de commande de freinage électroniques d'un côté de la défaillance.

2. Le procédé de gestion de force de freinage de qualité ferroviaire selon la revendication 1, où si une unité de commande principale spécifique dans un segment de réseau est défaillante, l'unité de commande principale défaillante règle un signal de commande principal de celle-ci sur « 0 », après que chaque unité de commande de freinage électronique a détecté que le signal de commande principal de l'unité de commande principale est réglé sur « 0 », le freinage est mis en oeuvre en utilisant une force de freinage répartie par l'autre unité de commande principale dans le segment de réseau, en plus, une voiture dans laquelle l'unité de commande principale est défaillante participe au calcul d'une force de freinage en utilisant un poids de voiture à voyageurs nominal, une capacité d'aérofreinage disponible de la voiture dans laquelle l'unité de commande principale est défaillante est réglée sur 0, la répartition de force de freinage de la voiture n'est pas effectuée, et d'autres voitures se chargent d'une force de freinage de la voiture, pour mettre en oeuvre la répartition de force de freinage du train tout entier.

3. Le procédé de gestion de force de freinage de qualité ferroviaire selon la revendication 1, où si l'intranet de freinage a une défaillance de déconnexion qui rend une unité de commande de freinage électronique autre que les unités de commande principales dans le segment de réseau hors ligne, les deux unités de commande principales dans le segment de réseau règlent des informations de poids de voiture d'une voiture dans laquelle l'unité de commande de freinage électronique hors ligne est située sur 0, la voiture de l'unité de commande de freinage électronique hors ligne participe au calcul d'une force de freinage en utilisant un poids de voiture à voyageurs nominal, une capacité d'aérofreinage disponible de la voiture dans laquelle l'unité de commande de freinage électronique hors ligne est située est réglée sur 0, la répartition de force de freinage de la voiture n'est pas effectuée, et d'autres voitures se chargent d'une force de freinage de la voiture, pour mettre en oeuvre la répartition de force de freinage du train tout entier.

4. Le procédé de gestion de force de freinage de qualité ferroviaire selon la revendication 1, où si une unité de commande de freinage électronique spécifique autre que des unités de commande principales dans un segment de réseau est défaillante, les deux unités de commande principales dans le segment de réseau règlent des informations de poids de voiture d'une voiture dans laquelle l'unité de commande de freinage électronique est défaillante sur 0, la voiture dans laquelle l'unité de commande de freinage électronique est défaillante participe au calcul d'une force de freinage en utilisant un poids de voiture à voyageurs nominal, une capacité d'aérofreinage disponible de la voiture dans laquelle l'unité de commande de freinage électronique est défaillante est réglée sur 0, la répartition de force de freinage de la voiture n'est pas effectuée, et d'autres voitures se chargent d'une force de freinage de la voiture, pour mettre en oeuvre la répartition de force de freinage du train tout entier.

5. Le procédé de gestion de force de freinage de qualité ferroviaire selon la revendication 1, où si le réseau de train est défaillant, des unités de commande principales de chaque segment de réseau calculent séparément une force de freinage requise dans le segment de réseau actuel et répartissent la force de freinage dans le segment de réseau actuel selon une instruction de freinage reçue, pour garantir une force de freinage requise par le train tout entier.

6. Le procédé de gestion de force de freinage de qualité ferroviaire selon la revendication 1, où le système de freinage comprend en outre une conduite matérielle de freinage, et les unités de commande principales de chaque segment de réseau sont connectées séparément à la conduite matérielle de freinage, pour recevoir une instruction de freinage de conduite matérielle.

7. Le procédé de gestion de force de freinage de qualité ferroviaire selon la revendication 1, où l'unité de commande principale reçoit un poids de voiture, des informations d'aérofreinage disponible de chaque voiture, des informations de freinage électrique, des informations de glissement de freinage électrique par l'intermédiaire du réseau de train et de l'intranet de freinage pour calculer et répartir une force de freinage du train tout entier et une force de freinage du segment de réseau actuel, et l'unité de commande de freinage électronique met en oeuvre par défaut un freinage selon une force de freinage répartie par l'unité de commande principale dans le segment de réseau actuel.

8. Le procédé de gestion de force de freinage de qualité ferroviaire selon la revendication 1, où le réseau de train est un réseau MVB ou un Ethernet, et l'intranet de freinage est un réseau CAN ou un réseau 485.

9. Le procédé de gestion de force de freinage de qualité ferroviaire selon la revendication 1, où le réseau CAN est une structure double redondante.

10. Le procédé de gestion de force de freinage de qualité ferroviaire selon la revendication 1, où une force de freinage électrique est d'abord utilisée, et l'aérofreinage est apporté en complément lorsque la force de freinage électrique est insuffisante ; et dans une situation où une unité de commande d'aérofreinage spécifique est défaillante, les unités de commande restantes dans le train tout entier effectuent un complément de force de freinage sans dépasser une condition d'adhésion.
